# EUROPÄISCHE PATENTSCHRIFT

(11) **EP 0 409 047 B1**
(45) Veröffentlichungstag und Bekanntmachung des Hinweises auf die Patenterteilung: **21.09.1994**
(21) Anmeldenummer: 90113141.7
(22) Anmeldetag: 10.07.1990
(51) Int. Cl.: H01H 11/00, H01H 33/66, C04B 37/02

(54) **Verfahren zur Herstellung einer Vakuumschaltkammer**
Method of manufacturing a vacuum interrupter chamber
Procédé de fabrication d'une chambre d'un interrupteur à vide

(30) Priorität: 11.08.1989 DE 3926619; 15.07.1989 DE 3923528
(43) Veröffentlichungstag der Anmeldung: 23.01.1991
(73) Patentinhaber: CALOR-EMAG ELEKTRIZITÄTS-AKTIENGESELLSCHAFT, D-40878 Ratingen (DE)
(72) Erfinder: Lipperts, Joseph, NL-5926 TH Venlo (NL); Bieber, Martin, D-4270 Dorsten (DE); Pilsinger, Günter, D-4000 Düsseldorf (DE)
(74) Vertreter: Rupprecht, Klaus, Dipl.-Ing.

(56) Entgegenhaltungen:
- CH-A- 242 550
- DD-A- 134 693
- DD-A- 135 661
- DE-A- 3 008 460
- DE-A- 3 628 174

## Beschreibung

Die Erfindung betrifft ein Verfahren zur Herstellung einer Vakuumschaltkammer gemäß Oberbegriff des Anspruches 1.

Ein solches Verfahren geht aus der DD-PS 13 46 93 als bekannt hervor. Beim bekannten Verfahren sollen in einem Ofenzyklus zunächst alle Einzelteile entgast werden, bis die Schmelztemperatur des Lotes mit niedriger Schmelztemperatur erreicht ist. In der Regel wird die Temperatur dabei kontinuierlich bis zur Schmelztemperatur des Lotes hochgefahren. Die hochreinen Kupferteile enthalten nur noch geringe Gasmengen, und die eingesetzten größeren Metallteile, wie Deckel, sind vor dem Einfügen in die Lötgruppe üblicherweise in einem speziellen Entgasungsverfahren vorbehandelt worden. Hierzu wird im Journal of Vacuum Science and Technology 1972, Vol. 9. NE 4, July-August 1972, Seite 1203 - 1208, by E. Fisher: "Two Kilometers of 10⁻¹⁰ Torr, the CERN Intersecting Storage Rings for Protons" berichtet, daß Entgasungszyklen von 950° C während ein bis zwei Stunden bei einem Druck von kleiner 10⁻⁵ Torr für 2 bis 2,5 mm dicke Edelstahlteile optimale Ergebnisse bezüglich Entgasung und Reinigung liefern.

Dieses Entgasungsglühen erfordert einen separaten Ofenzyklus. Im übrigen sind die verwendeten silberhaltigen Fügelote sehr teuer, da sie Palladium enthalten.

Die Aufgabe der Erfindung ist es, den Aufwand für die Herstellung der Vakuumschaltkammer zu vermindern.

Dies gelingt mit den kennzeichnenden Merkmalen des Anspruches 1.

Demzufolge wird in einem einzigen Ofenzyklus die Lötung der Lötgruppe sowie die Entgasung, insbesondere der Edelstahl- bzw. der Titanteile, vorgenommen. Eine Besonderheit besteht darin, daß während des Entgasens das erste niedrigschmelzende Lot sich in der Regel in der Liquidusphase befindet. Damit ist es möglich, trotz der relativ hohen Entgasungstemperatur von mindestens 860°C ein preiswertes, bei niedrigen Temperaturen schmelzendes Silberlot als Fügelot einzusetzen. Hierfür eignet sich besonders das Lot B-Ag 72 Cu780 mit 72 Gew. % Silber sowie 28 % Kupfer.

Es wurde gefunden, daß ungeachtet der relativ langen Einwirkzeit des flüssigen Silberlotes keine Versprödungseffekte an der Edelstahllötfläche eintreten. Auch die mit dem Edelstahl bzw. dem Titan oder dessen Legierungen zu verbindenden Kupferteile neigen nicht zur Versprödung. Zwar diffundiert das Silber in das Kupfer ein, jedoch nur in feindisperser, d. h. unschädlicher Form. Insbesondere ist es mit dem Verfahren nach der Erfindung möglich, einen separaten Ofenzyklus für das Entgasungsglühen einzusparen. Neben dieser Kostenersparnis ergibt sich mit dem neuen Verfahren eine qualitative Verbesserung der Oberflächengüte bzw. -reinheit der Kammerteile, da diese nach der Entgasung nicht erneut kontaminiert werden können. Dadurch werden derart niedrige Totaldrükke der verschlossenen Kammer erreicht, daß der Einsatz eines Getters nicht mehr zwingend notwendig ist.

Je geringer die Wandstärke der Edelstahl- bzw. Titanteile ausfällt, desto geringer kann die Glühdauer für deren Entgasung gewählt werden. Bei Wandstärken von 1 mm oder kleiner kann die Glühdauer auf minimal 10 Minuten reduziert werden.

Das Erfindung wird anhand von schematischen Darstellungen beispielhaft erläutert.

Es zeigen:

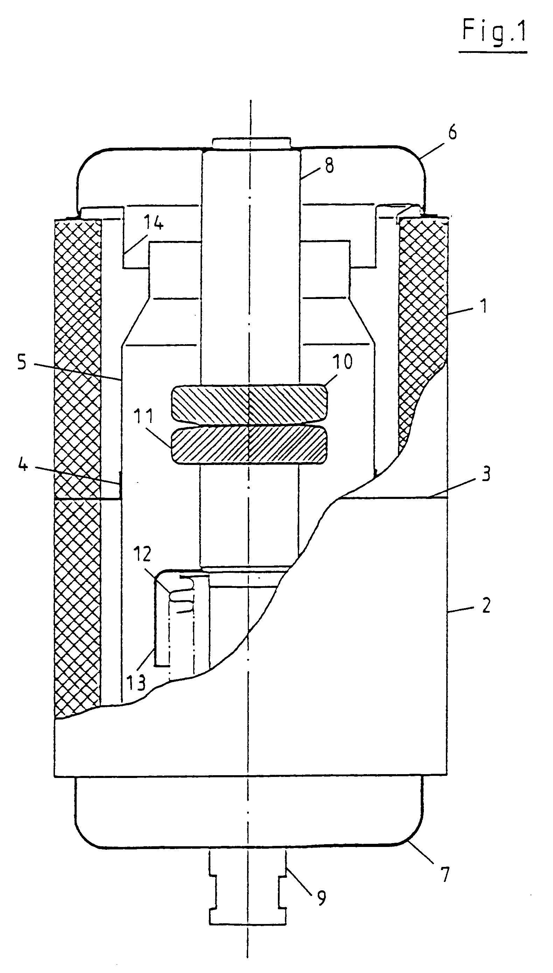

- Figur 1: einen Teillängsschnitt durch eine Vakuumschaltkammer;
- Figur 2: ein vergrößerter Teillängsschnitt im Bereich des Deckels mit feststehendem Leiterstengel;
- Figur 3: eine Draufsicht der Anordnung nach Figur 2;
- Figur 4: eine Darstellung eines Ofenzykluses hinsichtlich Temperatur und Zeit.

Die Vakuumschaltkammer besitzt einen Isolierkeramikmantel, bestehend aus zwei Teilzylindern 1, 2, die unter Zwischenlage eines Metallringes 3 aufeinandergelötet sind. An einem Kragen 4 des Metallringes ist ein aus Titan, austenitischem Edelstahl oder Kupfer bzw. deren Legierungen, gebildeter Kondensationsschirm 5 konzentrisch zu den Zylindern 1, 2 - diese gegen Lichtbogenprodukte schützend - festgemacht.

Der Keramikmantel ist beidseitig von metallischen Dekkeln 6, 7 aus nichtrostendem austenitischem Edelstahl oder Titan abgeschlossen. Durch diese ragt einerseits ein feststehender Leiterstengel 8 sowie andererseits ein beweglicher Leiterstengel 9. Beide Stengel tragen im Inneren der Schaltkammer miteinander in Kontakt bringbare Kontaktstücke 10, 11. Ein Metallbalg 12 besorgt die Abdichtung zwischen dem beweglichen Leiterstengel 9 und dem zugehörigen Deckel 7. Ein haubenartig angeordneter Schutzschirm 13 verhindert ein direktes Einwirken des Ausschaltlichtbogens auf den Balg 12.

Metallische Steuerschirme 14 überdecken jeweils die innere stirnseitige Kante des zylindrischen Keramikmantels. Sie enthalten Zentrieransätze, mit denen die Dekkel 6, 7 konzentrisch zu den Teilzylindern 1, 2 ausrichtbar sind. Zum einen wird ein solcher Zentrieransatz von aus den Steuerschirmen 14 ausgestellten Laschen 15 gebildet, die sich, die innere Kante der jeweiligen Stirn des Teilzylinders 1, 2 übergreifend, an der Innenseite der Teilzylinder zentrierend anlegen. Andererseits bildet der Steuerschirm 14 mit dem auf der Stirnseite der Teilzylinder 1, 2 sich erstreckenden Fortsatz 16 eine Ringschulter 17, über die der jeweilige Deckel 1, 2 zentrierend geschoben werden kann. Für das Fügen (Verbinden) der lötfähigen Teile der Vakuumschaltkammer wird eine sog. Lötgruppe zusammengestellt und zwischen die Teile Lot, z. B. in Ringfolienform, eingebracht.

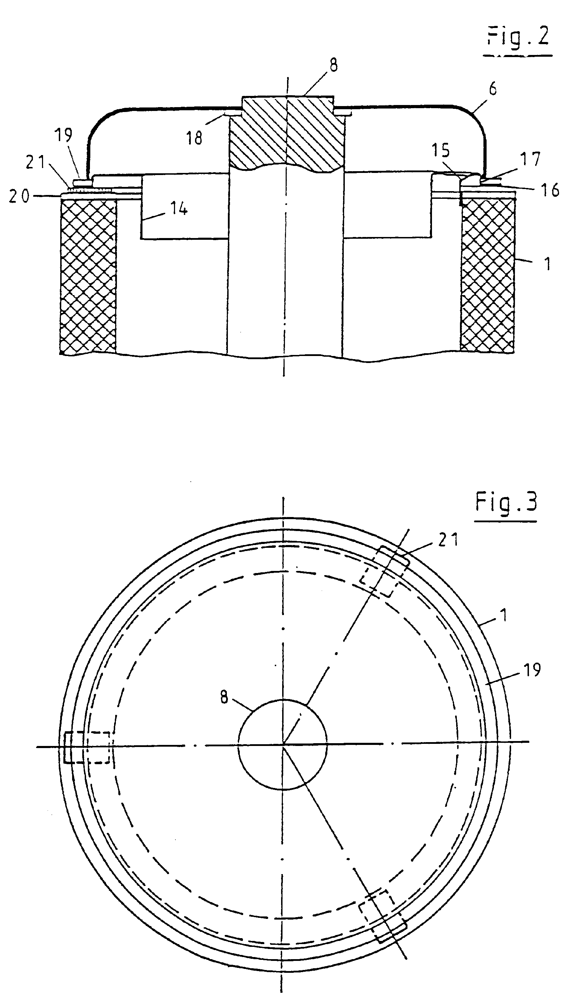

Wie aus Figur 2 ersichtlich, ist ein solches Fügelot 18, 19, 20 zum Verbinden der Teile 8, 6 sowie 6, 16 und schließlich 16, 1 in Form von Ringfolien vorhanden. Zwischen den Fortsatz 16 des Steuerschirmes 14 sowie dem Lot 20 ist an drei Stellen auf dem Kreisumfang ein Verschlußlot 21 in Form von Lotklötzen angeordnet. Für dieses Lot ist eine sparsame Verwendung - insbesondere wegen des hohen Preises - angezeigt. In der Regel enthält es Palladium. Zwischen den einzelnen Lotklötzen entsteht ein Spalt, über den die Gase aus dem Kammerinneren, insbesondere beim Entgasungsglühen, abgepumpt werden. Das Verschlußlot 21 besitzt demnach eine höhere Schmelztemperatur als die eingesetzten Fügelote.

In der Vakuumschaltkammer werden z. B. folgende Materialien mit dem silberhaltigen Fügelot verbunden:
- Kupfer/Kuper,
- Kupfer/Edelstahl,
- Edelstahl/Edelstahl,
- Keramik/Kupfer,
- Keramik/Keramik sowie
- Titan/Keramik.

Der Steuerschirm 14 einschließlich seines Fortsatzes 16 besteht aus Kupfer; er nimmt als Kompensator die unterschiedlichen Längendehnungen zwischen dem Edelstahldekkel 6 sowie dem Keramikzylinder 1 auf. Der Deckel 6 stößt stumpf auf den Fortsatz 16 auf.

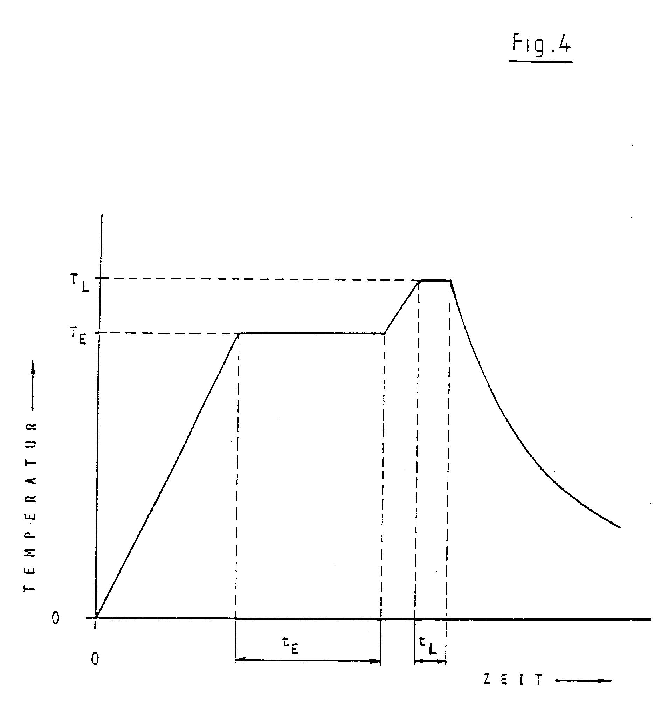

In Figur 4 ist der Lötzyklus mit integriertem Entgasungsglühen von Edelstahl bzw. Titan in Form eines Diagrammes dargestellt.

Es bedeutet:
- T_{E} = die Entgasungstemperatur von Edelstahl bzw. Titan,
- T_{L} = die Liquidustemperatur des höchst schmelzenden Lotes, nämlich des Verschlußlotes,
- t_{E} = Glühdauer des Entgasungsglühvorganges,
- t_{L} = Haltezeit der Löttemperatur T_{L}.

Zunächst wird die Temperatur des Glühofens kontinuierlich bis auf die Entgasungsglühtemperatur T_{E} von Edelstahl bzw. Titan hochgefahren. Diese ist abhängig von der Werkstoffart, um z. B. ein sicheres Benetzen der Edelstahlteile zu gewährleisten. Bei Stählen z. B. gemäß Werkstoffnummer 1.4301 bzw. 1.4306 sollte die Glühtemperatur mindestens 860°C betragen und bei Stahlteilen mit der Werkstoffnummer 1.4550 hingegen mindestens 900°C. Bei diesen Temperaturen beginnt sich die Oberflächenoxidschicht aufzulösen und die Fügelote 18, 19, 20 befinden sich in der Regel schon in der Liquidusphase. Sind z. B. Edelstahl- bzw. Titanteile mit Wandstärken in der Größenordnung von 1 mm vorhanden, so kann die Glühdauer t_{E} auf mindestens 10 Minuten herabgesetzt werden. Nach dem Entgasen wird die Temperatur kurz auf die Schmelztemperatur T_{L} des Verschlußlotes 21 erhöht. Das Lot verfließt und der Deckel 6 setzt sich - die Auspumpspalte verschließend - auf den Keramikzylinder 1 ab. In der anschließenden Abkühlphase verfestigen sich alle Lote und die Vakuumschaltkammer ist dicht verschlossen.

## Patentansprüche

1. Verfahren zur Herstellung einer Vakuumschaltkammer, deren zylindrischer Isolierkeramikmantel (1,2) stirnseitig jeweils von metallenen Deckeln (6,7) verschlossen ist und relativ zueinander bewegliche, Kontaktstücke (10,11) tragende Leiterstengel (8,9) die Deckel (6,7) durchgreifen, mit im Innern der Schaltkammer angeordneten metallischen Steuer- bzw. Kondensationsschirmen (5,14), wobei für die Herstellung der Schaltkammer das Fügen aller Lötstellen in einem einzigen Ofenzyklus erfolgt, in dessen Verlauf die Schaltkammer verschlossen wird und zwei Lote unterschiedlicher Schmelztemperatur eingesetzt sind, wobei das nur partiell verwendete Lot (Verschlußlot) höherer Schmelztemperatur zum Verschließen der Schaltkammer dient und als Lot (Fügelot) niedrigerer Schmelztemperatur ein silberhaltiges Lot verwendet wird, dadurch gekennzeichnet, daß mindestens für die metallenen Deckel (6,7) ein austenitischer, nichtrostender Edelstahl, Titan oder eine Titanlegierung verwendet wird, daß der Ofenzyklus ein Entgasungsglühen für die Edelstahl- bzw. Titanteile einschließt, das bei mindestens 860°C vorgenommen und dessen Dauer von der Materialstärke der eingesetzten Edelstahl- bzw. Titanteile abhängig gemacht wird, jedoch mindestens 10 Minuten beträgt, wobei die Schmelztemperatur der Fügelote gleich oder kleiner als die Entgasungsglühtemperatur gewählt ist, und daß das Lot niedrigerer Schmelztemperatur einen Schmelzbereich von etwa 700 bis 900°C sowie das Lot höherer Schmelztemperatur einen Schmelzbereich von 870°C bis 980°C aufweist.

2. Verfahren nach Anspruch 1, dadurch gekennzeichnet, daß die verwendeten Edelstahl- bzw. Titanteile eine Materialstärke von kleiner/gleich 5 mm aufweisen.

3. Verfahren nach Anspruch 1 oder 2, dadurch gekennzeichnet, daß das Fügelot neben Silber lediglich Kupfer enthält.

4. Verfahren nach Anspruch 3, dadurch gekennzeichnet, daß das Fügelot 72 % Silber und 28 % Kupfer enthält.

5. Verfahren nach Anspruch 1 bis 4, dadurch gekennzeichnet, daß als Verschlußlot ein Lot mit 54 % Silber, 21 % Kupfer und 25 % Palladium verwendet wird.

## Claims

1. Process for producing a vacuum switch chamber, the cylindrical insulating ceramic casing (1, 2) of which is sealed at the end face in each instance by metal covers (6, 7), and conductor stalks (8, 9) which are movable relative to one another and carry contact pieces (10, 11) which penetrate the covers (6, 7) [sic], having metallic control and respectively condensation shields (5, 14) disposed in the interior of the switch chamber, in which for the production of the switch chamber the connecting of all soldering positions takes place in a single furnace cycle, in the course of which the switch chamber is sealed and two solders of differing melting point are used, in which the higher melting point solder (sealing solder) which is used only in part serves to seal the switch chamber and a silver-containing solder is used as lower melting point solder (connecting solder), characterized in that an austenitic, stainless special steel, titanium or a titanium alloy is used at least for the metal covers (6, 7), in that the furnace cycle includes a degassing annealing for the special steel parts and titanium parts respectively, which degassing annealing is undertaken at at least 860°C and the duration of which is made dependent upon the material thickness of the special steel parts or respectively titanium parts employed, but is at least 10 minutes, the melting point of the connecting solders being selected to be equal to or lower than the degassing annealing temperature, and in that the lower melting point solder exhibits a melting range of approximately 700 to 900°C and the higher melting point solder exhibits a melting range of 870°C to 980°C.

2. Process according to Claim 1, characterized in that the special steel parts and respectively titanium parts employed exhibit a material thickness of smaller than/equal to 5 mm.

3. Process according to Claim 1 or 2, characterized in that the connecting solder contains, besides silver, only copper.

4. Process according to Claim 3, characterized in that the connecting solder contains 72% silver and 28% copper.

5. Process according to Claims 1 to 4, characterized in that a solder having 54% silver, 21% copper and 25% palladium is used as sealing solder.

## Revendications

1. Procédé de fabrication d'une chambre de commutation à vide dont l'enveloppe (1, 2) cylindrique isolante en céramique est fermée à ses extrémités frontales par des couvercles (6, 7) métalliques, comportant des tiges de conducteurs (8, 9) qui portent des pièces de contact (10, 11), sont mobiles l'une par rapport à l'autre et traversent les couvercles (6, 7) ainsi que des écrans de commande et de condensation (5, 14) métalliques qui sont disposés à l'intérieur de la chambre de commutation, la liaison de l'ensemble des points de soudure lors de la fabrication de la chambre de commutation étant réalisée au cours d'un cycle unique de chauffage au four au cours duquel la chambre de commutation est scellée et deux métaux d'apport avec des températures de fusion différentes sont utilisés, le métal d'apport (soudure de scellement) à température de fusion plus élevée utilisé par endroits servant à sceller la chambre de commutation et le métal d'apport (soudure d'assemblage) à température de fusion plus basse étant un métal d'apport à base d'argent, caractérisé par le fait que, pour les couvercles (6, 7) métalliques au moins, on utilise un acier spécial inoxydable austénitique, du titane ou un alliage de titane, que le cycle de chauffage au four comprend un recuit de dégazage pour les éléments en acier spécial ou en titane qui est opéré à 860 °C au moins et dont la durée est fonction de l'épaisseur des éléments en acier spécial ou en titane utilisés mais est de 10 minutes au moins, la température de fusion des soudures d'assemblage étant égale ou inférieure à la température de recuit de dégazage, et par le fait que la soudure à température de fusion plus basse présente une zone de fusion comprise entre environ 700 et 900 °C et la soudure à température de fusion plus élevée une zone de fusion comprise entre environ 870 et 980 °C.

2. Procédé selon la revendication 1, caractérisé par le fait que les éléments utilisés en acier spécial ou en titane ont une épaisseur inférieure/égale à 5 mm.

3. Procédé selon la revendication 1 ou 2, caractérisé par le fait que le métal d'apport pour les soudure d'assemblage ne contient que du cuivre en plus de l'argent.

4. Procédé selon la revendication 3, caractérisé par le fait que la soudure d'assemblage contient 72 % d'argent et 28 % de cuivre.

5. Procédé selon les revendications 1 à 4, caractérisé par le fait que l'on utilise comme soudure de scellement une soudure contenant 54 % d'argent, 21 % de cuivre et 25 % de palladium.
